# EUROPEAN PATENT APPLICATION

(11) **EP 1 608 085 A2**
(43) Date of publication of application: **21.12.2005**
(21) Application number: 05012903.0
(22) Date of filing: 15.06.2005
(51) Int. Cl.: H04B 7/10

(54) **Mobile terminal having satellite signal receiving antenna**

(30) Priority: 15.06.2004 KR 2004044210
(71) Applicant: LG ELECTRONICS INC., Seoul (KR)
(72) Inventor: Son, Hyun-Wung, Gunpo Gyeonggi-Do (KR)
(74) Representative: von Hellfeld, Axel

(57) **Abstract**

A mobile terminal having a satellite signal receiving antenna comprises a terminal body, and a plurality of satellite signal receiving antennas mounted at the body with an interval for respectively receiving a satellite signal and a signal transmitted from a terrestrial repeater for a diversity. Accordingly, a diversity method for preventing a lowering of an intensity of a received wave due to a fading phenomenon at the time of receiving a satellite broadcasting is implemented.

## Description

### BACKGROUND OF THE INVENTION

### 1. Field of the Invention

The present invention relates to a mobile terminal, and more particularly, to a mobile terminal having a satellite signal receiving antenna capable of preventing an intensity of a received wave from being lowered at the time of receiving a satellite signal.

### 2. Description of the Conventional Art

In a mobile communication, a research for solving a fading phenomenon generated as several transmission signals are received via multiple paths is being actively performed.

The fading phenomenon refers to a phenomenon that an intensity of a received signal is drastically varied according to a change of a medium through which the received signal has passed. For example, a sound effect and a sound quality are sometimes varied at the time of listening to an abroad short-wave broadcasting. The above case is generated because a state of an electric wave is changed when the electric wave transmitted from a transmission side is transmitted to a reception side.

The fading phenomenon is caused due to the following reasons. First, an electric wave loss is caused as an electric constant of a medium through which an electric wave passes is varied per time. Second, a curve of a wave path causes the fading phenomenon. Third, when electric waves transmitted from the same transmission point are received via at least two paths, an integrated electric wave may cause an interference according to a phase difference. The fading phenomenon is very influenced by a reception point, a frequency, a polarized wave, etc.

In order to solve the fading phenomenon, a diversity method has been developed. The diversity method is a method for removing a fading phenomenon generated while an electric wave is transmitted and always receiving the electric wave with a certain intensity.

The diversity using the characteristic of the fading phenomenon comprises a space diversity for installing at least two receiving antennas at positions spaced from each other, a frequency diversity for transmitting the same communication information with being included in different electric waves more than two, a polarized wave diversity using two polarized waves perpendicular to each other, etc.

A mobile terminal has been developed in pursuit of a small size, a multifunction, a low consumption power. An antenna, an essential component of the mobile terminal manages the start and the end of a signal input and a signal output and determines a call quality. The antenna has to be differently designed according to a shape and a material of the mobile terminal, thereby being designed with a difficult technique.

The antenna is characterized by three main factors, an impedance, a gain, and a directivity. The impedance denotes an amount by which a current does not easily flow. A radio aid apparatus (RIG), a coaxial cable, and an antenna respectively have an impedance value. When the three impedance values are coincident to one another, an electric wave can be transmitted the most effectively.

A line for supplying electric energy to the antenna is called as a supply line, and the supply line is composed of an external conductor and an inner conductor. Also, a line that an axis of the external conductor and an axis of the inner conductor are consistent to each other is called as a coaxial cable.

The gain denotes a function of the antenna. Even if a constant output is supplied to the antenna, an effect of a higher output is generated according to a function of the antenna. The effect is called as a gain, and a unit of the gain is dB.

When an antenna having a higher gain is used, the antenna can be effectively communicated with a distant radio base station even with a small output. The directivity denotes a characteristic that the antenna transmits an electric wave much more towards a specific direction.

An antenna having a directivity is called as a directional antenna, and an antenna having no directivity and transmitting an electric wave equally towards every direction is called as a non-directional antenna.

Even if an antenna generally transmits an electric wave in three dimensions, a three-dimensional directivity can not be supposed. Accordingly, only a directivity on a horizontal surface and a directivity on a vertical surface are supposed for convenience. As the most representative example, the directional antenna is used for detecting an originated position of an electric wave.

The diversity antenna refers to an antenna composed of at least two antennas of which output terminals are connected to each other. The diversity antenna prevents a fading phenomenon and increases a gain by combining outputs of the antennas into a single reception signal. In case of using two antennas, a reception power is increased by 2.2dB on an average. Also, in case of adding more antennas; the diversity gain is increased in proportional to a square root of the number of used antennas.

In order to apply the diversity method to the mobile terminal, two antennas and two radial frequency receiving units are used to receive each signal and the two signals are combined to each other by a bandwidth processing unit in the conventional art. The above diversity method is a space diversity method for obtaining a distance between antennas and effectively combining each signal.

The polarized wave diversity method was also used in the conventional antenna. The polarized wave diversity method is for implementing a diversity function by installing two antennas having different polarized waves at receiving terminals when a signal transmitted from a transmitting terminal is reflected or diffracted by obstacles, etc. and thereby a polarized wave characteristic of the signal is changed.

That is, in the conventional art, a polarized wave diversity antenna was constructed by using a principle that a perpendicular polarized wave signal transmitted from a terrestrial repeater is reflected or diffracted and thereby a polarized wave characteristic of the signal is changed. However, since a satellite repeater transmits a circular polarized wave signal and a terrestrial repeater transmits a perpendicular polarized wave signal, a diversity antenna for directly combining the signal transmitted from the satellite repeater and the signal transmitted from the terrestrial repeater and thereby effectively processing the two signals was required.

As a satellite digital multimedia broadcasting service is performed, an antenna having a high directivity or a circular polarized wave antenna for receiving the satellite digital multimedia broadcasting had to be additionally provided besides a linear perpendicular polarized wave antenna.

### SUMMARY OF THE INVENTION

Therefore, an object of the present invention is to provide a mobile terminal having a satellite signal receiving antenna capable of preventing a lowering of an intensity of a received electric wave due to a fading phenomenon at the time of receiving a satellite broadcasting.

To achieve these and other advantages and in accordance with the purpose of the present invention, as embodied and broadly described herein, there is provided a mobile terminal having a satellite signal receiving antenna comprising: a terminal body; and a plurality of satellite signal receiving antennas mounted at the body with an interval for respectively receiving a satellite signal and a signal transmitted from a terrestrial repeater for diversity .

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIGURE 1 is a perspective view showing a state that a front cover and a rear cover are folded to a mobile terminal according to a first embodiment of the present invention;
FIGURE 2 is a perspective view showing a state that the front cover and the rear cover are opened in the mobile terminal according to the first embodiment of the present invention;
FIGURE 3 is a perspective view showing a state that a satellite signal receiving antenna according to a second embodiment of the present invention is folded;
FIGURE 4 is a perspective view showing a state that the satellite signal receiving antenna according to the second embodiment of the present invention is opened;
FIGURE 5 is a disassembled perspective view showing a part 'A' of FIGURE 3 by an enlargement;
FIGURE 6 is a perspective view showing a state that a satellite signal receiving antenna according to a third embodiment of the present invention is being taken out of a mobile terminal;
FIGURE 7 is a perspective view showing a state that the satellite signal receiving antenna according to the third embodiment of the present invention is being inserted into the mobile terminal; and
FIGURE 8 is a sectional view taken along line VIII-VIII in FIGURE 7.

### DETAILED DESCRIPTION OF THE PREFERRED EMBODIMENTS

Reference will now be made in detail to the preferred embodiments of the present invention, examples of which are illustrated in the accompanying drawings.

Hereinafter, a mobile terminal having a satellite signal receiving antenna according to the present invention will be explained with reference to the attached drawings.

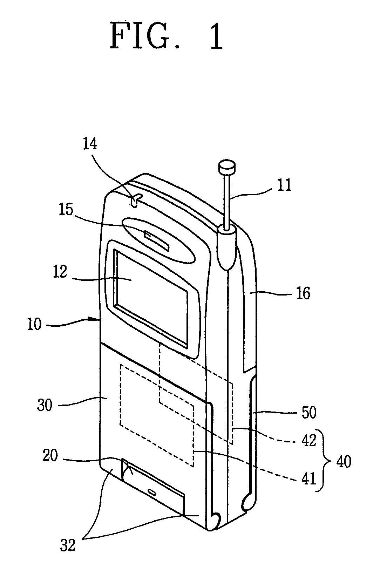

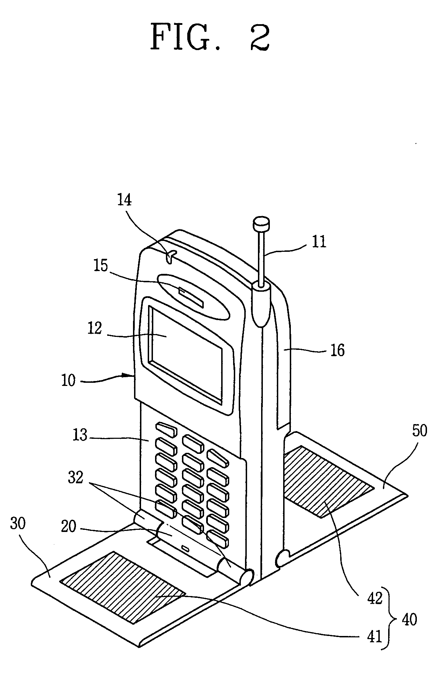

FIGURE 1 is a perspective view showing a state that a front cover and a rear cover are folded to a mobile terminal according to a first embodiment of the present invention, and FIGURE 2 is a perspective view showing a state that the front cover and the rear cover are opened in the mobile terminal according to the first embodiment of the present invention.

As shown, a mobile terminal having a satellite signal receiving antenna comprises a body 10 including a display 12 for outputting visual information, and a plurality of satellite signal receiving antennas 40 mounted at the body 10 with an interval.

The body 10 comprises a front cover 30 hinge-coupled to a front surface thereof, and a rear cover 50 hinge-coupled to a rear surface thereof so as to be rotated in an opposite direction to a rotation direction of the front cover 30.

The body 10 is provided with a terrestrial wave receiving antenna 11 for receiving a code division multiple access (CDMA) signal transmitted from a terrestrial repeater, etc. at one side thereof.

The terrestrial wave receiving antenna 11 is a dual resonant antenna, and receives not only a signal from a terrestrial repeater but also a satellite signal.

The front cover 30 is provided with a front cover hinge portion 32 at one side thereof thereby to be rotatably connected to a front hinge portion 20 provided at the body 10. Likewise, the rear cover 50 is provided with a rear cover hinge portion (not shown) at one side thereof thereby to be rotatably connected to a rear hinge portion (not shown) provided at the body 10. The front hinge portion 32 provided at the body 10 corresponds to the rear hinge portion (not shown) on the basis of the body 10. It is preferable to construct that the front cover 30 and the rear cover 50 are respectively perpendicular to the body 10 when the front cover 30 and the rear cover 50 are opened.

The satellite signal receiving antenna 40 comprises a first antenna 41 attached to an inner surface of the front cover 30, and a second antenna 42 attached to an inner surface of the rear cover 50.

Since the terrestrial wave receiving antenna 11 is a dual resonant antenna for receiving not only a terrestrial signal but also a satellite signal, the satellite signal receiving antenna may be provided with only one of the first antenna 41 and the second antenna 42. Even under the above construction, the terrestrial wave receiving antenna 11 and the satellite signal receiving antenna 40 can generate a diversity effect. All of the first antenna 41, the second antenna 42, and the terrestrial wave receiving antenna 11 can serve as a diversity antenna.

The satellite signal receiving antenna 40 may be attached to outer surfaces of the front cover 30 and the rear cover 50, and may be mounted in the front cover 30 and the rear cover 50.

As the satellite signal receiving antenna 40, a chip antenna, an internal monopole antenna, a micro strip patch antenna, etc. can be used. For example, a micro strip patch antenna can be installed both at the front cover 30 and at the rear cover 50. Also, a chip antenna can be installed at the front cover 30 and an internal monopole antenna can be installed at the rear cover 50.

Unexplained reference numerals 13, 15, and 16 of FIGURES 1 and 2 respectively denote a key pad portion, a speaker, and a charger.

An operation and an effect of the mobile terminal having a satellite signal receiving antenna according to a first embodiment of the present invention will be explained.

When a satellite signal is not received, the front cover 30 and the rear cover 50 are folded to the body 10 and thereby the satellite signal receiving antenna 40 that is not used does not serve as a stumbling block.

On the contrary, at the time of receiving a satellite signal, the front cover 30 and the rear cover 50 are unfolded from the body as a right angle. The satellite signal receiving antennas 40 mounted at the front cover 30 and the rear cover 50 receive each satellite signal, and are operated as a diversity antenna since they are spaced from each other, thereby enhancing a signal quality. Also, a sensitivity for receiving an electric wave can be controlled by detecting an optimum position for receiving an electric wave by controlling rotated angles of the front cover 30 and the rear cover 50.

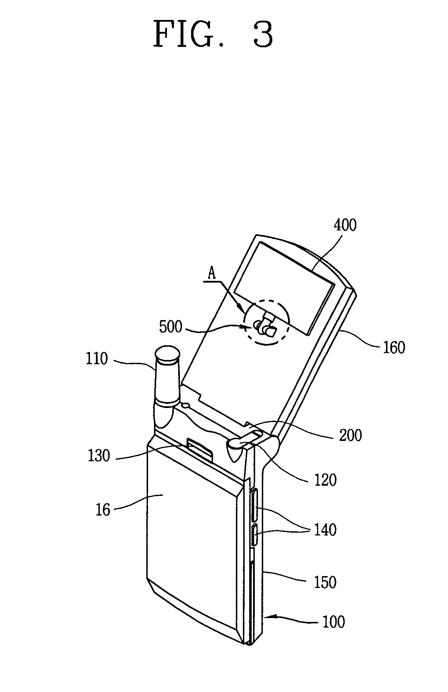

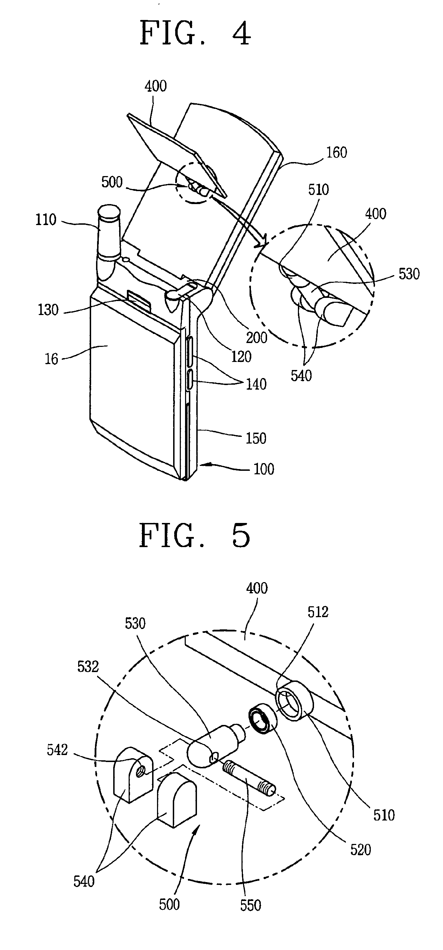

FIGURE 3 is a perspective view showing a state that a satellite signal receiving antenna according to a second embodiment of the present invention is folded, FIGURE 4 is a perspective view showing a state that the satellite signal receiving antenna according to the second embodiment of the present invention is opened, and FIGURE 5 is a disassembled perspective view showing a part 'A' of FIGURE 3 by an enlargement. The same reference numerals were given to the same parts as those of the first embodiment.

As shown, a body 100 further comprises a connecting unit 500 connected to one of the plurality of satellite signal receiving antennas 400 for rotating the satellite signal receiving antenna in up and down directions and in right and left directions.

The body 100 comprises a key pad portion 150 having a key pad (not shown) for inputting characters, and a folder portion 160 rotatably connected to the key pad portion150 by a hinge portion 200 and having a display (not shown). In the present invention, a folder type mobile terminal was used but various types such as a slide type mobile terminal, etc, may be used.

The key pad portion 150 is provided with a side key 140 at a side surface thereof, and is provided with a microphone (not shown) for inputting voice information.

Even if the connecting unit 500 is attached to an outer side of the folder portion 160, the connecting unit 500 may be attached to an outer side of the key pad portion 150.

The connecting unit 500 comprises a pair of fixing members 540 protruded from an outer surface of the folder portion 160 and facing each other with a certain interval, a rotation shaft disposed between the fixing members 540 and having one side fixed by a pin 550 to be rotated up and down, and a rotation member 510 inserted into another side of the rotation shaft 530 and having a coupling groove 512 to be rotated right and left.

A screw groove 542 is formed at both inner surfaces of the fixing members 540, and the rotation shaft 530 is provided with a hole 532 at one side thereof. The pin 550 penetrates the hole 532 formed at the rotation shaft 530 thereby to be coupled to the screw groove 542.

Preferably, a bearing 520 is mounted at a coupling groove 512 formed at the rotation member 510 so as to be rotated with the rotation shaft 530.

The satellite signal receiving antenna 400 is electrically connected to a printed circuit board inside the body 100 by a flexible connector cable.

The body 100 is provided with a dual resonant antenna 110 for receiving a terrestrial signal transmitted from a terrestrial repeater and a satellite signal at one side thereof.

Unexplained reference numerals 120 and 130 of FIGURES 3, 4, and 5 respectively denote a jack hole cover, and a locker button.

An operation and an effect of the mobile terminal having a satellite signal receiving antenna according to the second embodiment of the present invention will be explained as follows.

When a satellite signal is not received, the connecting unit 500 is folded and thereby the satellite signal receiving antenna 400 is attached to the body 100 so as not to serve as a stumbling block.

On the contrary, at the time of receiving a satellite signal, the connecting unit 500 is unfolded thereby to control angles of the satellite signal receiving antennas in order to detect an optimum position for receiving an electric wave. The satellite signal receiving antenna 400 and the dual resonant antenna 110 for receiving a satellite signal are spaced from each other and thus are operated as a diversity antenna, thereby enhancing a quality of a received signal.

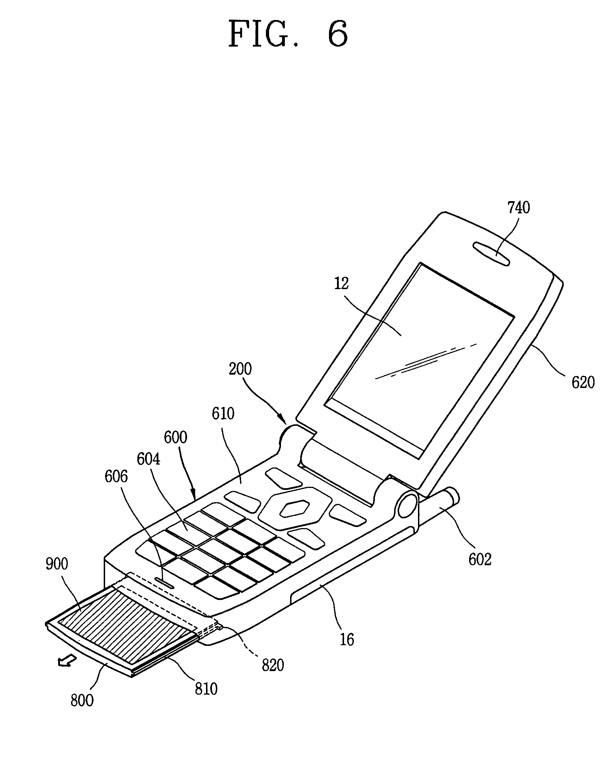

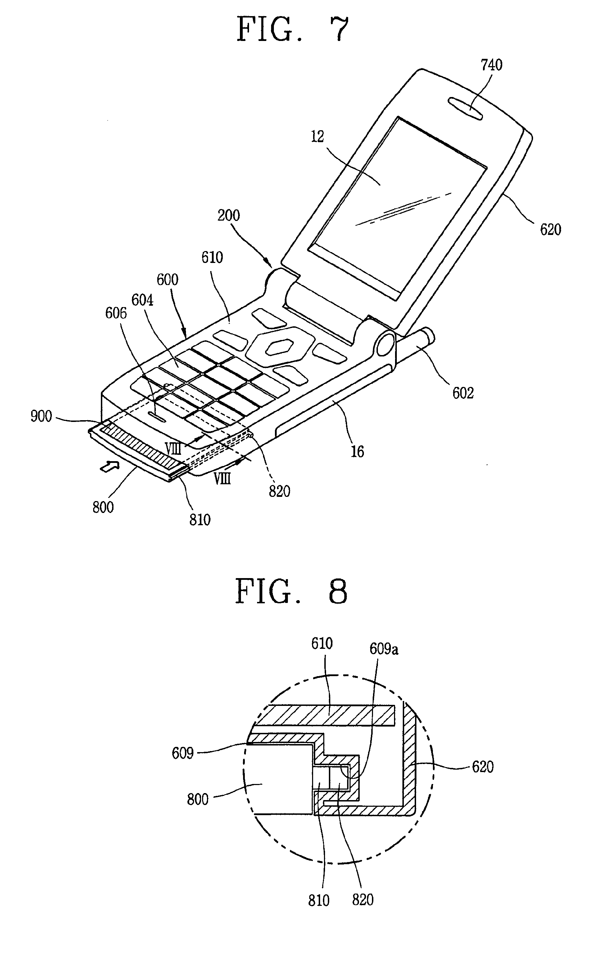

FIGURE 6 is a perspective view showing a state that a satellite signal receiving antenna according to a third embodiment of the present invention is being taken out of a mobile terminal, FIGURE 7 is a perspective view showing a state that the satellite signal receiving antenna according to the third embodiment of the present invention is being inserted into the mobile terminal, and FIGURE 8 is a sectional view taken along line VIII-VIII in FIGURE 7. The same reference numerals were given to the same parts as those of the first embodiment.

As shown, a body 600 is provided with a satellite signal receiving antenna 900 at one side thereof, and is further provided with a slider for inserting or drawing the satellite signal receiving antenna 900 therein/therefrom by a slide motion.

As the satellite signal receiving antenna 900, various antennas for receiving a satellite signal can be used. As one example of the satellite signal receiving antenna 900, a circular polarized wave antenna is preferably used.

The circular polarized wave antenna is a dielectric ceramic antenna corresponding to a micro strip antenna. The dielectric ceramic antenna is a square ceramic substrate on which a silver electrode of a thick film is printed and a radiation electrode and a ground electrode are formed. The dielectric ceramic antenna can be more minimized than an antenna formed on a Teflon glass substrate, and is not susceptible to temperature.

In the preferred embodiment, the slider 800 is mounted in an insertion space 609 formed at a lower end surface of the body 600. However, the slider 800 may be inserted into or drawn out of a side surface of the body 600 by forming the insertion space 609 at the side surface of the body 600.

The body 600 comprises a key pad portion 610 having a key pad 604, and a folder portion 620 rotatably connected to the key pad portion 610 by a hinge portion 200 and having a display 12. In the third embodiment of the present invention, a folder type mobile terminal was used but various types such as a slide type mobile terminal, etc, may be used like in the second embodiment.

The slider 800 is provided with a rail 810 protruded from both side surfaces thereof, and a stopping jaw 820 is provided at the end of the rail 810. A rail groove 609a for inserting the rail 810 and guiding is formed at both side surfaces of the insertion space 609.

The insertion space 609 is formed at a lower portion of a printed circuit board 630 mounted in the body 600, but is not limited to the position.

The slider 800 can be manually operated as a user directly inserts or draws out the slider with his hand, or can be automatically operated by a motor (not shown) inside the body 600, etc.

Preferably, a drawn length of the slider 800 towards outside is arbitrarily controlled.

The body 600 is provided with a dual resonant antenna 602 for receiving a signal transmitted from a terrestrial repeater and a satellite signal at one side thereof.

Unexplained reference numerals 606, 620, and 740 in FIGURES 6, 7, and 8 respectively denote a microphone, a body case, and a speaker.

An operation and an effect of the mobile terminal having a satellite signal receiving antenna according to the third embodiment of the present invention will be explained.

When a satellite signal is not received, the slider 800 is inserted into the body 600 not to serve as a stumbling block.

On the contrary, at the time of receiving a satellite signal, the slider 800 is drawn out up to an optimum position for receiving an electric wave. The satellite signal receiving antenna 900 and the dual resonant antenna 602 for receiving a satellite signal are spaced from each other and thus are operated as a diversity antenna, thereby enhancing a quality of a received signal.

As aforementioned, the mobile terminal having a satellite signal receiving antenna implements a diversity function for receiving a satellite broadcasting thereby to receive a signal of a high quality, and the front cover and the rear cover are used as a supporting means of the mobile terminal in order to receive a satellite signal more stably.

When a satellite signal is not received, the satellite antennas are received into the body. On the contrary, at the time of receiving a satellite signal, angles of the satellite antennas are properly controlled thereby to implement a diversity function for receiving a satellite broadcasting.

Also, angles of the satellite antennas are controlled to detect an optimum position for receiving an electric wave by installing the rotatably connecting unit at the outer surface of the body, so that the satellite antennas are operated as a diversity antenna more effectively.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A mobile terminal having a satellite signal receiving antenna comprising:
a terminal body; and
a plurality of satellite signal receiving antennas mounted at the body with an interval for respectively receiving a satellite signal and a signal transmitted from a terrestrial repeater for a diversity.

2. The terminal of claim 1, wherein the satellite signal receiving antennas comprise a helical antenna for receiving a perpendicular polarized wave, and a circular polarized wave antenna for receiving a right hand-side circularly polarized (RHCP) wave.

3. The terminal of claim 2, wherein the circular polarized wave antenna is a dielectric ceramic antenna that is a square ceramic substrate on which a silver electrode of a thick film is printed and a radiation electrode and a ground electrode are formed.

4. The terminal of claim 1, wherein the body comprises a front cover hinge-coupled to a front surface thereof and a rear cover hinge-coupled to a rear surface thereof so as to be rotated in an opposite direction to a rotation direction of the front cover, and a first circular polarized wave antenna is attached to the front cover and a second circular polarized wave antenna is attached to the rear cover.

5. The terminal of claim 4, wherein the front cover and the rear cover are respectively perpendicular to the body when the front cover and the rear cover are opened.

6. The terminal of claim 1, wherein the body is provided with a terrestrial wave receiving antenna for receiving a signal transmitted from a terrestrial repeater at one side thereof.

7. The terminal of claim 6, wherein the terrestrial wave receiving antenna is a dual resonant antenna for receiving not only a terrestrial signal but also a satellite signal.

8. The terminal of claim 1, wherein the body further comprises a connecting unit connected to one of the plurality of satellite signal receiving antennas for rotating the satellite signal receiving antenna in up and down directions and in right and left directions.

9. The terminal of claim 8, wherein the connecting unit comprises:
a pair of fixing members protruded from an outer surface of the body and facing each other with a certain interval;
a rotation shaft disposed between the fixing members and having one side fixed by a pin to be rotated up and down; and
a rotation member inserted into another side of the rotation shaft and having a coupling groove to be rotated right and left.

10. The terminal of claim 8, wherein the body is provided with a dual resonant antenna for receiving a satellite signal and a signal transmitted from a terrestrial repeater at one side thereof.

11. The terminal of claim 1, wherein the body further comprises a slider for inserting or drawing out a satellite signal receiving antenna mounted at one side thereof by a slide motion.

12. The terminal of claim 11, wherein the satellite signal receiving antenna is a circular polarized wave antenna.

13. The terminal of claim 11, wherein the slider is mounted in an insertion space formed at a lower end surface of the body.

14. The terminal of claim 11, wherein the slider is provided with a rail protruded from both side surfaces thereof, and a stopping jaw is provided at an end of the rail.

15. The terminal of claim 13, wherein the insertion space is provided with a rail groove for inserting the rail and guiding at both side surfaces thereof.

16. The terminal of claim 11, wherein the body is provided with a dual resonant antenna for receiving a satellite signal and a signal transmitted from a terrestrial repeater at one side thereof.

17. The terminal of claim 11, wherein the slider is connected to a driving unit inside the body and is automatically inserted or drawn out by a signal.

18. The terminal of claim 11, wherein the slider has a drawn length towards outside that can be arbitrarily controlled.
